**Europäisches Patentamt**

**European Patent Office**

**Office européen des brevets**

(19)

(11) Publication number: **0 121 785**
A2

(12) # EUROPEAN PATENT APPLICATION

(21) Application number: **84102528.1**

(22) Date of filing: **08.03.84**

(51) Int. Cl.³: **B 01 D 31/00,** B 01 D 13/00,
B 01 D 29/30

(30) Priority: **10.03.83 US 474820**

(43) Date of publication of application: **17.10.84**
**Bulletin 84/42**

(84) Designated Contracting States: **BE DE FR GB IT NL**

(71) Applicant: **NEPTUNE MICROFLOC, INCORPORATED,**
**1965 Airport Road P.O. Box 612, Corvallis**
**Oregon 97339 (US)**

(72) Inventor: **Comstock, Daniel Lee, 2435 N.W. 13th Street,**
**Corvallis Oregon (US)**
Inventor: **Hagen, Robert Douglas, 2570 Liberty Road,**
**Dallas Oregon (US)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath,**
**Maximilianstrasse 58, D-8000 München 22 (DE)**

(54) **Method and apparatus for enhancing the flux rate of cross-flow filtration systems.**

(57) A method of increasing the cross-flow filtration flux of a liquid through an elongated porous filter tube, comprising the
steps of flowing a portion of the liquid transversely through the
filter tube wall by establishing a pressure differential across the
filter tube wall, and maintaining the filtration flux rate transversely through the filter tube wall at substantially the same
value along the entire length of the filter tube during filtration.
Typically, the portion of the liquid exiting from the downstream
end of the filter tube is recycled back to the feed end of the filter tube via a return line having a recycle pump operatively connected thereto, and the filtration flux rate is maintained at substantially the same value along the entire length of the filter
tube by pumping make-up of the liquid to be filtered into the return line at a point between the downstream end of the filter
tube and the recycle pump connection, whereby the pressure
drop measured between a point immediately upstream of the
feed end and a point immediately following the downstream
end is approximately zero during filtration.

Apparatus for increasing the cross-flow filtration flux of a
liquid through an elongated porous filter tube comprises an el-
ongated porous filter tube, means for flowing the liquid into the
tube and for flowing a portion of the liquid transversely through
the filter tube wall, including means for establishing a pressure
differential across the filter tube wall, and means for maintaining the filtration flux rate transversely through the filter tube

TWO-PUMP CROSS-FLOW FILTER SYSTEM

0121785

wall at substantially the same value along the entire length of the filter tube. Broadly, the apparatus of the invention preferably further comprises a recycle line fluidly connected between the outlet and the feed end of the filter tube, a recycle pump operatively connected to the recycle line for recycling the portion of the liquid exiting from the outlet back to the feed end, and the means for maintaining the filtration flux rate at substantially the same value along the entire length of the filter tube includes a make-up pump operatively connected to the recycle line at a point between the tube outlet and the recycle pump connection for pumping make-up of the liquid to be filtered into the recycle line, thereby maintaining the pressure drop measured between a point immediately upstream of the feed end a point immediately following the outlet at approximately zero during filtration.

European Patent Application 84 102 528.1
Neptune Microfloc, Incorporated
EP 1496

-- 1 --

## METHOD AND APPARATUS FOR ENHANCING THE FLUX RATE OF CROSS-FLOW FILTRATION SYSTEMS

The present invention relates to cross-flow filtration for removal of suspended and collidal solids and/or emulsified oil from liquids, particularly water, wastewater, industrial wastes, and industrial process streams. More specifically, the invention relates to a method and apparatus for increasing the rate of transfer of liquids containing such solids and/or oil across a porous cross-flow filter tube (referred to herein as the "filtration flux").

In water and wastewater treatment, clarifiers and through-flow filters are conventionally used for removal of suspended and colloidal solids. Such systems have inherent disadvantages. Without preclarification, most filters are unable to handle the resulting higher solids loadings. Likewise, even with a clarifier in the process train, filtered particles continuously accumulate on and within through flow filter media. The filter flux rate decreases with time (or headloss increases) and frequent backwashing is required to remove the accumulated solids from the filter medium. When product water is used for backwashing there is a significant net decrease in total water production. Relatively large volumes of low solids wastewater are also created which must receive some type of further handling. There is also the problem of filter breakthrough. Moreover, water quality is extremely process dependent.

Cross-flow filtration is substantially different from through-flow filtration, in that feed water is introduced parallel to the filter surface, and filtration occurs in a direction perpendicular to the direction of the feed flow. Cross-flow filtration satisifes a much wider range of applications and provides economic benefits that other conventional options do not. Cross-flow filtration systems are capable of clarification, filtration, and thickening in one process step. Equipment costs approach those of direct filtration; yet cross-flow filtration is capable of filtering streams that contain suspended solids concentrations of 10,000 mg/L or higher. Furthermore, cross-flow systems require less space than conventional systems. Cross-flow filtration systems include membrane systems such as microfiltration, reverse osmosis and ultrafiltration. The major disadvantages of the latter two membrane processes in liquids-solids separation are low flux rates and susceptibility to fouling. These liabilities ultimately translate into high system construction and operating costs. However, both of these problems have been virtually eliminated in a new method of cross-flow microfiltration utilizing thick-walled porous thermoplastic tubes sold under the trademark HYDROPERM™ The filtration characteristics of these tubes combine both the "in-depth" filtration aspects of multi-medial filters and the "thin-skinned" aspects of membrane ultrafilters.

The porosity of HYDROPERM™ tubes results from the open cell reticulated structure of the tube wall. HYDROPERM™ tubes differ from conventional membrane ultrafilters, in that they have pore sizes on the order of several microns, wherein the length of a pore is many times that of its diameter. These tubes are described in greater detail, for example, in "HYDROPERM™ CROSS FLOW MICROFILTRATION", Daniel L. Comstock, et al., Neptune Microfloc, Inc., Report No. KT 7307, May 1982, and in Report No. 77-ENAS-51 of the American Society of Mechanical Engineers, entitled "Removal of Suspended and Collidal Solids from Waste Streams by the Use of Cross-FLow Microfiltration", which reports are hereby incorporated herein by reference to the extent necessary for a thorough understanding of the background of the invention.

Feed flow is through the center of HYDROPERM™ tubes at a relatively low pressure, typically less than 30 psi. The filtrate is typically collected in a jacket surrounding the exterior tube wall and withdrawn therefrom by a product line. As feed flow circulates through the tube, solid particles are slowly driven with the product flow toward the tube wall. Thus, the concentration of particles in regions close to the inner wall steadily increases.

In cross-flow filtration systems generally, because the direction of the feed flow is tangential to the filter surface, accumulation of the filtered solids on the filtering medium is reduced by the shearing action of the flow. Cross-flow filtration thus affords the possiblity of a quasi-steady state operation with a nearly constant flux when the driving pressure differential is held constant. Unfortunately, this theoretical possibility has not been achieved in practice. Thus, the problem of declining filtration fluxes has plagued conventional cross-flow filtration systems.

4

In general, any liquid from which suspended solids removal is desired will contain a wide range of particulate sizes, ranging in effective diameter from several microns down to colloidal dimensions. Because of the "in-depth" filtration characteristics of thick-walled, theremoplastic tubes, such as HYDROPERM™ tubes, particles smaller than the largest pore size of the tube may, under certain circu.s-stances, enter the wall matrix. In any event, above a certain solids concentration in the feed, the majority of the suspended solids are retained at the inner wall of the tube and quickly form a dynamic membrane (also referred to as a "filter cake" or "sludge layer"). The dynamic membrane is, we believe, largely responsible for the filtration which subsequently occurs.

For tubular cross-flow filters to work most efficiently, a certain minimum suspended solids concentration must be present. Below this minimum, individual pores of the tube are blocked by individual particles (blocking filtration). This results in rapid flux declines. Above this minimum, particles become self-supporting and form a filter cake over the pores of the tube. In cake filtration, the tube matrix does not become blocked. This is the desired filtration mechanism, since resistance is minimal through a cake and maximum through a partially blocked tube matrix.

In view of the fact that an increase in filtration flux will permit far more economical processing of solids laden liquids, the art has sought methods for increasing the filtration flux in cross-flow filtration systems.

Various cleaning techniques have previously been investigated for restoring the filtration flux value. Such cleaning techniques have involved chemical and/or physical cleaning of the surface of the filter medium. For example, chemical solvents have been used to dissolve the layer-building filtered particles so as to yield a clean, layer-free filter surface. On the other hand, a simple physical cleaning technique commonly used is back-flushing of the filter medium, i.e., temporary reversal of the filtrate flow direction. This cleaning technique is frequently used in conjunction with cross-flow filtration processes utilizing hollow tubular filters.

Despite the success of the above-noted cleaning procedures, the cross-flow filtration art continues to search for new techniques for improving such cleaning processes and for increasing filtration fluxes, in order to make cross-flow filtration processes more economical.

Filtration fluxes through tubular cross-flow filtration modules can be increased by increasing the active filter tube surface area in the modules by, for example, increasing the length of the filter tubes. However, the pressure losses normally encountered across such cross-flow filtration modules, including friction losses, constitute a significant factor in limiting the practical length of conventional filter tubes. Consequently, it would be highly desirable to effectively remove or overcome such losses, so as to permit the practical use of considerably longer filter tubes, thereby increasing filtration fluxes. To date, this need remains unsolved.

The present invention overcomes the above-noted problems and disadvantages of the prior art by providing a method and apparatus for increasing the cross-flow filtration flux of solids laden liquids through a filter tube by maintaining the filtration flux rate transversely through the filter tube wall at substantially the same value along the entire length of the filter tube during filtration.

The degree of flux enhancement obtained in accordance with the present invention depends to varying degrees upon the characteristics of the particular liquid feed being processed, and particularly the chemicals, if any, added as pretreatment, and the characteristics of the suspended solids, as well as various operational parameters of the overall cross-flow filtration process, including the filter tube cleaning techniques utilized, e.g. backflushing.

Additional objects and advantages of the invention will be set forth in part in the description which follows, and in part will be obvious from the description, or may be learned by practice of the invention. The objects and advantages of the invention will be realized and attained by means of the instrumentalities and combinations, particularly pointed out in the appended claims.

To achieve the objects and in accordance with the purpose of the invention, as embodied and broadly described herein, the invention comprises a method of increasing the cross-flow filtration flux of a liquid through an elongated porous filter tube, comprising the steps of flowing a portion of the liquid transversely through the filter tube wall by establishing a pressure differential across the filter tube wall; and maintaining the filtration flux rate transversely through the filter tube wall at substantially the same value along the entire length of the filter tube during filtration. Typically, the portion of the liquid exiting from the downstream end of the filter tube is recycled back to the feed end of the filter tube via a return line having a recycle pump operatively connected thereto, and the filtration flux rate is maintained at substantially the same value along the entire length of the filter tube by pumping make-up of the liquid to be filtered into the return line at a point between the downstream end of the filter tube and the recycle pump connection, whereby the pressure drop measured between a point immediately upstream of the feed end and a point immediately following the downstream end is approximately zero during filtration. The flow rate of the make-up liquid is preferably selected to equal the flow rate of the filtrate permeated through the filter tube wall.

Broadly, the method of the invention further comprises the additional step of periodically backflushing a liquid transversely through the filter tube wall from the filtrate side by reversing the direction of the pressure differential, thereby physically cleaning the filter tube. Typically, the back-flushed liquid includes the filtrate and the duration of each back-flushing period is about 2 seconds and the interval between backflushings is within the range of from about 1 minute to about 2 minutes.

The invention, in its broadest apsects, also comrpises apparatus for increasing the cross-flow filtration flux of a liquid through an elongated porous filter tube, comprising: an elongated porous filter tube; means for flowing the liquid into the tube and for flowing a portion of the liquid transversely through the filter tube wall, including means for establishing a pressure differential across the filter tube wall; and means for maintaining the filtration flux rate transversely through the filter tube wall at substantially the same value along the entire length of the filter tube during filtration.

Broadly, the apparatus of the invention further comprises a recycle line fluidly connected between the outlet and the feed end of the filter tube, a recycle pump operatively connected to the recycle line for recycling the portion of the liquid exiting from the outlet back to the feed end, and wherein the means for maintaining the filtration flux rate at substantially the same value along the entire length of the filter tube includes a make-up pump operatively connected to the recycle line at a point between the tube outlet and the recycle pump connection for pumping make-up of the liquid to be filtered into the recycle line, thereby maintaining the pressure drop measured between a point immediately upstream of the feed end a point immediately following the outlet at approximately zero during filtration.

Typically, a plurality of the elongated porous filter tubes are provided, the tubes being encased in a filtrate collection jacket, with the tubes and the jacket forming a filtration module, and the apparatus includes means operatively connected to the filtrate collection jacket for periodically backflushing a liquid transversely through the filter tube wall from the filtrate side by reversing the direction of the pressure differential, thereby physically cleaning the filter tube.

The accompanying drawings, which are incorporated in and constitute a part of this specification, illustrate various features of the invention and, together with the description, serve to explain the principles of the invention.

Fig. 1 is a schematic flow diagram, in partial cross-section, showing a conventional prior art cross-flow filtration tube module, showing the direction of feed flow (circulation) and the direction of filtrate flow (permeation),

Fig. 2 is a schematic flow diagram illustrating another conventional prior art cross-flow filtration tube module; and

Fig. 3 is a schematic flow diagram illustrating the preferred embodiment of the present invention.

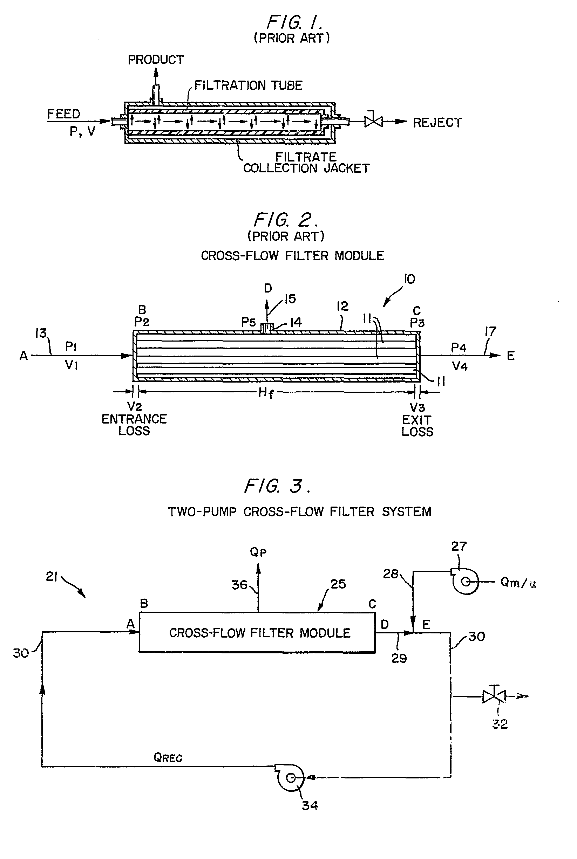

Reference will now be made in detail to the presently preferred embodiment of the invention, an example of which is illustrated in Fig. 3 of the accompanying drawings.

Cross-flow filtration in accordance with the invention may be accomplished, for example, using thick-walled, microporous thermoplastic tubes. These tubes can be made from a wide variety of extrudable thermoplastics, such as, for example, nylon or polyethylene, and typically have walls of about one millimeter in thickness. Although subject to variation, such tubes may, for example, possess a dominant pore size on the order of about one to ten microns and a porosity on the order of about 65% i.e., the pores cover 65% of the surface area of the tubes. The preferred, although certainly not the only, porous thermoplastic tubes useful in practicing the present invention are the previously mentioned HYDROPERM™ tubes having the characteristics referred to above, which tubes are presently commercially available from Neptune Microfloc, Inc., of Corvallis, Oregon.

A schematic view of conventional cross-flow filtration through such a thick-walled, microporous thermoplastic tube is shown in Fig. 1. A liquid feed flows through the inside of the tube at relatively low pressures, e.g., 2 to 50 psi, and filtrate permeation occurs through the tube wall, which is relatively thick, e.g. on the order of about one millimeter.

During the initial stages of microfiltration, a majority of the suspended solids in the feed is deposited onto the wall as the dynamic membrane (sludge layer). The growth of this dynamic membrane is limited by the shear forces acting on it due to the circulation velocity of the liquid flowing lengthwise along the tube. This shearing action takes the form of erosion. The balance of the deposition rate and the erosion rate of the dynamic membrane establishes an equilibrium sludge layer thickness, and therefore the equilibrium (plateau) fluxes, for the feed being filtered. This balancing condition is critically dependent on the characteristics of the suspended solids in the feed liquid. Two types of suspended solids can be categorized as limiting cases, namely, those which are cohesionless and those which are cohesive. For cohesive solids, the bonding stress between particles is relatively large, so that once they are brought into contact, higher shearing force is required to break their bond. In other words, this type of solid requires a relatively strong erosion effect. On the other hand, cohesionless solids have weak bonds with respect to each other and are therefore much more easily eroded. Even in the case of a cohesionless solid, however, binding to the interior wall of the filter tube may occur, thus producing a thin, adhering layer immediately adjacent to the wall, which will require a strong erosion effect to remove it.

Other parameters that govern solids behaviour are the effective solid particle diameter and the particle size distribution in the feed. The characteristics of the feed liquid itself, such as pH, viscosity, etc., may also show some influence on the behaviour of the suspended solids in the feed. Chemical additives are commonly used in wastewater treatment, and their addition to the wastewater will also change the characteristics of the suspended solids, and thus will vary the flux rate.

Since it is desirable to render the dynamic membrane on the filter tube wall cohesionless, chemical pretreatment of the feed prior to cross-flow filtration may prove advantageous in practicing the invention in conjunction with the filtration of many liquids. In general, the objective of such pretreatment should be to obtain a feed comprising a fluffy or loose type, cohesionless floc. Examples of typical conventional pretreatment additives suitable for use in the present invention include, without limitation, conventional flocculants (e.g., calcium hydroxide, alum, calcium sulfate, ferric hydroxide, etc.), polyelectrolyte flocculants, and additives such as those disclosed in U.S. Patent No. 4 313 830.

As previously noted, conventional cross-flow filtration devices; including microfilters, ultrafilters and reverse osmosis units, experience a decline in flux rate during filtration runs until an equilibrium (plateau) flux rate is attained. Flux rates (F) observed during the initial (non-equilibrium) phase of a filtration run are proportional to the feed velocity (V), the pressure differential ($\Delta P$), and time (t). In contrast, the flux rates observed during the equilibrium phase (i.e. plateau fluxes) are proportional essentially only to feed velocity.

Fig. 2 is a schematic flow diagram, in partial cross section, showing a conventional prior art filtration tube module. The suspended solids (and/or emulsified oil) laden liquid to be filtered flows through a filter tube module 10 in the direction shown by the arrows. As shown, tube module 10 includes three microporous filter tubes 11 (e.g., HYDROPERM™ tubes) encased within a closed filtrate collection jacket 12. Preferably, commercial scale tube modules 10 will include a plurality (as many as hundreds) of filter tubes 11 arranged in a parallel tube bundle (not shown) within a single jacket 12. A conventional inlet (circulation) pump (not shown) provides the requisite inlet pressure ($P_1$) and liquid flow velocity ($V_1$) in feed line 13.

A portion of the liquid is permeated transversely through the wall of filter tubes 11, thereby depositing at least a portion of the solids/emulsified oil on the inner surface of tubes 11 as a dynamic membrane (not shown) as discussed previously. The liquid permeated through filter tubes 11 (i.e. the filtrate) is collected in closed jacket 12 surrounding filter tubes 11, and the collected liquid is removed from jacket 12 via a port 14 extending through the jacket and connected to product (filtrate) line 15. The filtrate exit pressure in product line 15, designated ($P_5$), is essentially zero in conventional cross-flow filtration systems.

The portion of the liquid which is not permeated through the wall of filter tubes 11 exits from module 10 via a port (not shown) in jacket 12 and via exit line 17 connected thereto at a velocity designated $V_4$ and at an exit pressure designated $P_4$, as shown. A conventional back pressure valve (not shown) is typically situated in exit line 17 to establish a net positive pressure in filter tubes 11, as known in the art.

The flux enhancement technique of the present invention is preferably practiced together with a conventional form of physical cleaning of the filter medium, namely, back-flushing.

In Fig. 2, "P" values are the pressures at the indicated locations; "V" values are the fluid velocities at the indicated locations; and "Hf" is the friction loss across the tube module.

Referring still to Fig. 2, in conventional cross-flow

0121785

13

filter modules 10, feedwater enters the filtration module 10 at A. Filtrate exits at D, and the reject exits at E. Pressure losses normally encountered across such conventional modules 10 include: (1) the module entrance loss at B, (2) the friction loss, Hf, across the module and (3) the module exit loss at C.

Table A lists the average headloss expressions (in ft. of water) for the module 10 depicted in Fig. 2.

Table B lists calculated loss of head values for the module entrance and exit losses for an eight foot long filtration module similar to module 10. Also listed are the measured total pressure loss across the module (from A to E) and the friction loss across the module, calculated by subtracting the calculated entrance and exit losses from the total measured loss. The module comprised two 4 ft. long modules fluidly connected in series, with 12 HYDROPERM™ filter tubes per module. The inner diameter of the modules was 1 1/2 inches, the inner diameter of each tube was 6 mm, and the total active tube surface area for the two modules was 5.6 sq. ft.

The loss of head observed in conventional cross-flow filtration devices is undesirable for a number of reasons. First, flux rate can be shown to be a function of the average driving pressure of the module ($\Delta$P) which, in the terminology of Fig. 2, is expressed as follows:

TABLE A

HEADLOSS ITEMS

| Item | Average Lost Head |
|------|-------------------|
| Entrance loss | $0.5 \dfrac{(V2)^2}{2g}$ |
| Friction loss | $f \cdot \dfrac{L}{D} \cdot (\overline{V})^2 \cdot \dfrac{1}{2g}$ |
| Exit loss | $\dfrac{(V3)^2}{2g}$ |

Notes:

1. f is the friction coefficient of the filtration tube, L the tube length, and D the tube diameter.

2. V values are velocities in feet/second.

3. g is the gravitational constant.

4. $\overline{V}$ is the average velocity across the filter module equal to $(\dfrac{V2 + V3}{2})$.

TABLE B

LOSS OF HEAD VALUES ACROSS AN
EIGHT FOOT LONG MODULE

| Item | Loss, psi |
|------|-----------|
| Entrance loss | 0.263 |
| Friction loss | 4.11 |
| Exit loss | 0.313 |
| Total losses | 4.69 |

15

Operating parameters:

1. Velocities

$$V_2 = 8.85 \text{ fps}$$
$$V_3 = 6.83 \text{ fps}$$

2. Flux rate = 804 gal/day/ft$^2$.

$$\Delta P_{ave} = \left( \frac{P_2 + P_3}{2} \right) - P_5$$

Thus, when P3 is reduced to a value less than P2, $\Delta$ P will be decreased by an amount equal to $\left( \frac{P_2 - P_3}{2} \right) - P5$, with a proportional drop in the flux rate. There is also an unequal distribution of flux across the module when P3 is less than P2, since $\Delta$P measured at B is greater than $\Delta$ P at C. Since filter tube fouling is proportional to the flux rate, the head (feed) end B of the module 10 will foul at the greatest rate.

Another unwanted consequence of P3 being less than P2 is that backflushing cleaning techniques will be less successful. Backflushing is typically accomplished by backflushing filtrate transversely through the filter tube wall from the filtrate side by reversing the direction of the pressure differential, i.e., so as to reverse the direction of flow in product line 15. When P3 is less

16

than P2, the majority of the backflush flow will pass through the low pressure end of the filter tube (C). The high pressure end of the module (B), which is fouled the most severely will, thus, be cleaned least efficiently.

It can therefore be seen that pressure loss is a significant factor which limits the length of conventional cross-flow filtration modules. As an example, Table C lists the calculated friction losses for various length cross-flow filter modules when operated at an average velocity of 8 feet/second.

Referring now to Fig. 3, the present invention comprises a method of increasing the cross-flow filtration flux of a liquid through an elongated porous filter tube (not shown) in filtration system 21, comprising the steps of flowing a portion of the liquid transversely through the filter tube wall by establishing a pressure differential across the filter tube wall and maintaining the filtration flux rate transversely through the filter tube

TABLE C

MODULE LENGTH VERSUS FRICTION LOSS

| Module length, feet | Friction loss, psi |
|---|---|
| 4 | 2.32 |
| 8 | 4.65 |
| 12 | 6.97 |
| 16 | 9.30 |
| 20 | 11.62 |

Notes:

1. Filtration tubes are 0.236 inches I.D.

2. Friction factor used to calcuate losses is 0.027.

wall at substantially the same value along the entire length of the filter tube during filtration. Typically, the portion of the liquid exiting from the downstream (outlet) end (C) of the filter tube is recycled back to the feed end (B) of the filter tube via a return (recycle) line 30 having a recycle pump 34 operatively connected thereto. According to the invention, the filtration flux rate is maintained at substantially the same value along the entire length of the filter tube by pumping make-up of the liquid to be filtered (using pump 27) into the return line 30 at point (E) between the downstream end (C) of the filter tube and the recycle pump 34. As a result, the pressure drop measured between point (A) immediately upstream of the feed end of module 25 and point (D) immediately following the downstream end of the module is approximately zero during filtration. In a closed loop system such as that shown in Fig. 3, the flow rate of the make-up liquid in line 28 must equal the flow rate of the filtrate permeated through the filter tube wall.

Although the pressure losses are masked within module 25, as described above, the recycle pump 34 must, nevertheless, be sized to account for the module entrance loss, the module exit loss and the friction loss across the module. The make-up pump 27 serves to increase the system pressure.

Broadly, the method of the invention further comprises the step of periodically backflushing a liquid transversely through the filter tube wall from the filtrate side by reversing the direction of the pressure differential, thereby physically cleaning the filter tube. Typically, the backflushed liquid includes the filtrate, the duration of each backflushing period is about 2 seconds, and the interval between backflushings is within the range of from about 1 minute to about 2 minutes. The backflushing pressure is preferably on the order of about 50 psi.

Typically, a plurality of elongated porous filter tubes (not shown) are provided in module 25, with the tubes being encased in a filtrate collection jacket (not shown). The tubes and the jacket together form filtration module 25.

The present invention has the effect within the filtration module of removing or overcoming (i.e., masking) pressure losses normally associated with the module. This is accomplished by a two pump system as diagrammed, for example, in Fig. 3. Feedwater enters the module at A and reject exits at D.

In the present invention, additional pumping energy is supplied at E by the addition of make-up water. This is a closed loop system with respect to the recycle, with periodic solids blowdown at valve 32 being provided. In accordance with the present invention, the pressure at D may be made to equal (or even exceed) the pressure at A by simply providing sufficient pressure at E. This is illustrated by the following energy balance for module 25 (in units of pressure):

$$P_A + \frac{(V_A)^2}{2g} - H_{AB} - H_{BC} - H_{CD} + H_E = P_D + \frac{(V_D)^2}{2g}$$

Where,

$P_A$ = Pressure at A

$V_A$ = Velocity at A .

$P_D$ = Pressure at D

$V_D$ = Velocity at D

19

$H_{AB}$  =  Module entrance loss

$H_{BC}$  =  Friction loss across module

$H_{CD}$  =  Module exit loss

$H_{E}$  =  Energy input at E

When $P_A = P_D$ (as desired in the present invention),

$$H_E = \frac{(V_D)^2}{2g} - \frac{(V_A)^2}{2g} + H_{AB} + H_{BC} + H_{CD}.$$

Table D lists observed pressure and velocity data from an experiment conducted with a two pump apparatus such as that shown in Fig. 3. The cross-flow filtration experiment was conducted on a pilot-sized unit 21 that contained one 6.71 foot long cross-flow filtration module 25 with 4.8 ft$^2$ of HYDROPERM™ active tube area. Water from a holding tank (not shown) was pumped into the system at about 37.5 psig by a make-up pump 27. The make-up stream 28 was mixed with a recycle stream 29 at E before entering a conventional solids classifier/separator (not shown). Suspended solids contained in the combined stream 30 were partially removed by centrifugal force and periodically blowndown from the bottom of the separator via valve 32. Water exiting from the top of the separator was pressurized by a conventional centrifugal recycle pump 34 to an average inlet pressure of 38 psig before entering the module 25. Filtration occurred transversely through the HYDROPERM™ tube walls (not shown) and filtrate was collected on the shell side of module 25 and exited from the module via product line 36. The entrance velocity at B was 10 ft. per sec. and the exit velocity at C was 7 ft. per sec.

All tests were conducted with an artificial impurity, namely, lime added to tap water 22 in the holding tank. The lime precipitated hardness in the water to form a 2% (by wt.) suspension of calcium carbonate that served as filterable material for the experiment.

Backflushing was accomplished once per minute by reversing the flow direction in product line 36 for 2 seconds, using product water as the backflushing liquid and a driving pressure of 60 psig, in the manner discussed previously.

Referring to Fig. 3, $Q_p$ is the filtrate flow rate (gal./min.), $Q_{m/u}$ is the make-up flow rate (gal./min.), and $Q_{REC}$ is the recycle flow rate (gal./min.).

## TABLE D

### OBSERVED VERSUS CALCULATED PRESSURE DROP

| Location | Velocity, fps | Observed Pressure, psi | Calculated Single Pump System Pressures |
|----------|---------------|------------------------|----------------------------------------|
| A | 2.85 | 38 | 38 |
| D | 2.03 | 37.5 | 33.3 |

Notes:

1. Module length was 6.71 feet.

2. Flux rate was 1.350 gal./Day/ft$^2$.

Table D lists the measured liquid flow velocity (ft. per sec.) and pressure (psi) at location A (i.e., immediately upstream of the feed end of module 25) and at location D

(i.e., immediately downstream of the outlet of module 25).

As can be seen, the measured pressure at location D was virtually equal to the measured pressure at location A. That is, the normal entrance loss, exit loss and friction loss across module 25 were effectively removed or masked within the module. In the absence of such losses, module 25, and specifically, the filtration tubes in the module, can be constructed at any length desired to achieve maximum filtration fluxes.

Table D also lists the calculated single pump (i.e., conventional) system pressures for comparison purposes. As shown, for a similar conventional single pump system, a 4.7 psi pressure drop would be expected across a similar length module (i.e., the difference between the pressure calculated at A and that calculated at D). These conventional values were calculated on the basis of the following assumptions: (1) make-up pump 27 was eliminated from the system; (2) reject line 29 has a conventional back pressure valve (not shown) and reject flows into an open tank (not shown); (3) recycle pump 34 would be fed directly from the open tank; and (4) average liquid flow velocity inside the porous filtration tubes of 7.6 ft. per sec.

The present invention thus advances the cross-flow filtration art by masking pressure losses within the filtration module, thereby removing such losses as a factor in limiting maximum module (tube) length and permitting increased filtration fluxes, and by improving the effeciency of backflusing cleaning techniques by providing a constant flux rate along the entire length of the filter tubes.

Referring to Fig. 3, the flux enhancement in accordance with the invention is critically dependent on the proper sizing of the recycle pump 34 and the make-up pump 27.
Failure to do so will result in unequal pressures at
points A and D in the system. For example, if the
recycle pump 34 is oversized, the pressure at A will be
greater than the pressure at D. Conversely, if the
make-up pump 27 is oversized, the pressure at D may
exceed the pressure at A. Preferably, such situations
should be avoided in practicing the invention.

The recycle pump 34 must be sized to provide the
desired recycle flow rate ($Q_{REC}$) at the total dynamic
friction head generated within the filtration loop. For
a loop such as that shown in Fig. 3, such friction losses
include: (1) all piping and fitting losses between the
recycle pump discharge point and the filtration tube
module entrance at A, (2) module entrance, exit and
friction losses, and (3) piping and fitting losses
between the filtration tube module exit at D and the
recycle pump intake.

For the system shown in Fig. 3, the make-up pump 27 must
be sized to pump a flow rate equal to the product
(filtrate) flow rate ($Q_p$) at the desired filtration
module exit pressure (at D) plus the total friction head
(e.g., piping and fitting losses) between the make-up
pump discharge point and point E, immediatley following
the filtration tube module exit at D (pressure at D and
E may properly be assumed to be equal). That is, the
total dynamic head for the make-up pump equals the desired
pressure at D plus the friction head losses between the
make-up pump discharge point and point E.

With regard to the specific type of pumps to be utilized
for the recycle pump 34 and the make-up pump 27,
conventional centrifugal pumps and positive displacement
pumps may be used for each. However, centrifugal pumps
are preferred because of their versatility, simplicity and availability.

It will be apparent to those of ordinary skill in the art that various modifications and variations can be made to the above-described embodiments of the invention without departing from the scope of the appended claims and their equivalents. As an example, the invention can have application to cross-flow filtration systems other than microfiltration, such as, for example, ultrafiltration and reverse osmosis systems. Thus, it is intended that the present invention cover the modifications and variations of this invention, provided they come within the scope of the appended claims and their equivalents.

European Patent Application 84 102 528.1
Neptune Microfloc, Incorporated
EP 1496

24

CLAIMS:

1. A method of increasing the cross-flow filtration flux of a liquid through an elongated porous filter tube, comprising the steps of:

a) flowing a portion of the liquid transversely through the filter tube wall by establishing a pressure differential across the filter tube wall; and

b) maintaining the filtration flux rate transversely through the filter tube wall at substantially the same value along the entire length of the filter tube during filtration.

2. A method as claimed in claim 1, wherein the portion of the liquid exiting from the downstream end of the filter tube is recycled back to the feed end of the filter tube via a return line having a recycle pump operatively connected thereto, and wherein said filtration flux rate is maintained at substantially the same value along the entire length of the filter tube by pumping make-up of the liquid to be filtered into said return line at a point between the downstream end of the filter tube and said recycle pump connection, whereby the pressure drop measured between a point immediatley upstream of said feed end and a point immediatley following said downstream end is approximately zero during filtration.

3. A method as claimed in claim 2, wherein the flow rate of said make-up liquid is selected to equal the flow rate of the filtrate permeated through the filter tube wall.

4. A method as claimed in claim 1, further comprising the step of periodically backflushing a liquid transversely through the filter tube wall from the filtrate side

25

by reversing the direction of said pressure differential, thereby physically cleaning the filter tube.

5. A method as claimed in claim 4, wherein said backflushed liquid includes said filtrate, the duration of each backflushing period is about 2 seconds and the interval between backflushings is within the range of from about 1 minute to about 2 minutes.

6. A method as claimed in claim 1, wherein the pressure immediately downstream of the filter tube and the pressure immediately upstream of the filter tube are maintained at equal values.

7. Apparatus for increasing the cross-flow filtration flux of a liquid through an elongated porous filter tube, comprising:

a)  an elongated porous filter tube;

b)  means for flowing the liquid into said tube and for flowing a portion of the liquid transversely through the filter tube wall, including means for establishing a pressure differential across said filter tube wall; and

c)  means for maintaining the filtration flux rate transversely through the filter tube wall at substantially the same value along the entire length of the filter tube during filtration.

8. Apparatus as claimed in claim 6, further comprising a recycle line fluidly connected between the outlet and the feed end of said filter tube, a recycle pump operatively connected to said recycle line for recycling the portion of the liquid exiting from said outlet back to said feed end, and wherein said means for maintaining said filtration flux rate at substantially the same value along the entire length of the filter tube includes a make-up pump operatively connected to said recycle line at a point between said outlet and said recycle pump connection for pumping make-up of the liquid to be filtered into said recycle line, thereby maintaining the pressure drop measured between a point immediately upstream of said feed end and a point immediately following said outlet at approximately zero during filtration.

9. Apparatus as claimed in claim 6, wherein a plurality of said elongated porous filter tubes are provided, said tubes being encased in a filtrate collection jacket, said tubes and said jacket forming a filtration module.

10. Apparatus as claimed in claim 8, further comprising means operatively connected to said filtrate collection jacket for periodically backflushing a liquid transversely through the filter tube wall from the filtrate side by reversing the direction of said pressure differential, thereby physically cleaning the filter tube.

0121785

FIG. 1.
(PRIOR ART)

FIG. 2.
(PRIOR ART)
CROSS-FLOW FILTER MODULE

FIG. 3.
TWO-PUMP CROSS-FLOW FILTER SYSTEM